# EUROPÄISCHE PATENTSCHRIFT

(11) **EP 0 772 665 B1**
(45) Veröffentlichungstag und Bekanntmachung des Hinweises auf die Patenterteilung: **29.12.1999**
(21) Anmeldenummer: 95925706.4
(22) Anmeldetag: 19.07.1995
(51) Int. Cl.: C10L 3/10, E21B 43/34, E21F 7/00, F25J 3/06, F25J 3/08, B01D 5/00, B09B 1/00

(54) **VERFAHREN ZUR ANREICHERUNG DES METHANGEHALTES EINES GRUBENGASES**
METHOD OF ENRICHING THE METHANE CONTENT OF A MINE GAS
PROCEDE D'AUGMENTATION DE LA TENEUR EN METHANE D'UN GAZ DE MINE

(30) Priorität: 20.07.1994 DE 4425712
(43) Veröffentlichungstag der Anmeldung: 14.05.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: BACKHAUS, Clemens, D-46519 Alpen (DE); DIETZ, Bernhard, D-44139 Dortmund (DE)
(86) Internationale Anmeldenummer: DE9500950
(87) Internationale Veröffentlichungsnummer: WO9602614

(56) Entgegenhaltungen:
- US-A- 3 083 545
- US-A- 4 681 612
- US-A- 4 704 146

## Beschreibung

Die Erfindung betrifft ein Verfahren zur Anreicherung eines 20 bis 65% Methan enthaltenden Gruben- und/oder Deponiegases mittels einer Tieftemperaturzerlegung und eine entsprechende Einrichtung zur Durchführung des Verfahrens.

In Bergwerken und Deponien fällt eine erhebliche Menge von Gruben- und Deponiegas an. Dieses aus den Bergwerken und Deponien abgesaugte Gruben- bzw. Deponiegas enthält Methan in wechselnden Konzentrationen. Der Methangehalt dieser Gase liegt im Regelfall zwischen 20 und 65%. Da der Heizwert dieser Gase zu gering ist, wird es bisher hauptsächlich zur Verbrennung in eigens dafür ausgestatteten Brenneranlagen oder als Zusatzfeuerung eingesetzt.

Bisher ist es aus US 4 681 612 bekannt, mit einem Verfahren Kohlendioxid und Methan aus Deponie- oder Biogas zu trennen. Dabei erfolgt eine Abkühlung soweit, daß das Kohlendioxid verflüssigt wird und das im Ausgangsgas enthaltene Methan mit einer herkömmlichen Membranabtrennung separiert wird.

Ähnlich wird auch das aus US 4 704 146 bekannte Verfahren zur Verflüssigung von Kohlendioxid betrieben. Auch hier wird das Ausgangsgas soweit abgekühlt, daß das ursprünglich enthaltene Kohlendioxid flüssig wird und das weiter gasförmige Methan am Kopf einer Rektifikationskolonne abgezogen werden kann.

In der US 3 083 545 ist ein Verfahren zur Reinigung von Gasen beschrieben, die ebenfalls verflüssigt werden, um in diesem Fall Verunreinigungen abtrennen zu können. Das gereinigte Gas wird dann am Kopf und die verflüssigten Verunreinigungen am Boden eines als Doppelrohr ausgebildeten Fallfilmkondensators abgezogen.

Ausgehend hiervon ist es die Aufgabe der vorliegenden Erfindung, ein Verfahren und eine entsprechende Einrichtung vorzuschlagen, mit der es möglich wird, den Methangehalt in diesen Gasen so anzureichern, daß die Gruben- und/oder Deponiegase einen Heizwert aufweisen, der mit dem vom Erdgas vergleichbar ist, so daß diese Gase in das Erdgasnetz eingespeist werden können.

Die Aufgabe wird durch die kennzeichnenden Merkmale des Anspruches 1 und hinsichtlich der Einrichtung durch die kennzeichnenden Merkmale des Anspruches 14 gelöst. Vorteilhafte Weiterbildungen sind in den Unteransprüchen angegeben.

Mit dem erfindungsgemäßen Verfahren und der entsprechenden Einrichtung ist es nun möglich, den Methangehalt von Gruben- und/oder Deponiegas bis auf > 85% anzureichern. Damit steht ein dem Erdgas äquivalentes Gas mit einem entsprechenden Heizwert zur Verfügung. Das erfindungsgemäße Verfahren erlaubt somit die stoffliche Verwertung von Gruben- und/oder Deponiegas zu einem Gas mit dem dem Erdgas vergleichbaren Heizwert.

Erfindungsgemäß wird dazu das Gas drucklos den Bergwerken oder Deponien entnommen und mittels Verdichter, bevorzugterweise mittels Kompressoren, auf einen Druck im Bereich von 5 bis 15 bar verdichtet. In einer ersten Stufe wird nun dieses so verdichtete Gas von CO₂ befreit und über einen Trockner geleitet. Diese Maßnahme ist wichtig, um in den späteren Verfahrensschritten ein Auskristallisieren der entsprechenden Produkte zu verhindern. Dieses nun so vorbehandelte und verdichtete Gas wird dann vorgekühlt und zwar in der Weise, daß das Methan teilweise auskondensiert. Diese Maßnahme ist wesentlich, weil für den späteren Anreicherungsprozeß in der Tieftemperaturzerlegungsvorrichtung ein entsprechendes Gas/Flüssigkeitsgemisch eingespeist werden muß. Die eigentliche Anreicherung erfolgt nun mit dem, wie vorstehend beschrieben, vorbereiteten Gas/Flüssigkeitsgemisch. Dieses Gas/Flüssigkeitsgemisch kann nun entweder mittels einer sog. Rücklaufkondensation oder mit einer Tieftemperaturrektifikation angereichert werden.

Bevorzugt ist es hierbei, wenn die Anreicherung mittels einer sog. Rücklaufkondensation durchgeführt wird. Bei der Rücklaufkondensation strömt das eintretende Gas/Flüssigkeitsgemisch in eine von außen gekühlte mit Packungen gefüllte Säule und wird dort weiter auskondensiert. Es kommt dabei zu einer Aufkonzentrierung des schwer siedenden Methans im Sumpf. Durch Entspannen des Konzentrats und anschließender Aufgabe auf die Außenseite der Säule in den Kühlmantel wird eine Temperaturabsenkung erzielt. So kann das Konzentrat auf der Außenseite teilweise verdampfen und die Kondensation in der Säule bewirken. Das Methan enthaltende Produktgas wird dabei aus dem Kühlmantel entnommen und seiner weiteren Verwendung zugeführt. Die leichter siedenden Restgase (vor allem Stickstoff und Sauerstoff) werden dabei am Kopf der Säule abgezogen.

Eine weitere bevorzugte Ausführungsform sieht dann noch vor, daß die Säule mehrstufig ausgestaltet wird. Dazu ist es vorgesehen, daß zwei bis vier, bevorzugt drei Sümpfe vorgesehen sind, so daß über die Länge der Säule Stufen mit unterschiedlicher Anreicherung entstehen. In den oberen Stufen nimmt dann die Konzentration von Stickstoff und Sauerstoff laufend zu, so daß der Siedepunkt der entspannten Flüssigkeit im Mantel wieder abnimmt. Die Anzahl der notwendigen Stufen ist im wesentlichen abhängig von der niedrigsten Methankonzentration des Einsatzgases, das verarbeitet wird. Die Erzeugung von flüssigem Kopfprodukt zur Verwendung als Rücklauf ist im Gegensatz zur Grubengaszerlegung durch Rektifikation in diesem Prozeß nicht erforderlich.

Die Zerlegung des Einsatzgases kann auch durch eine Doppelsäulenrektifikation erfolgen. Derartige Tieftemperaturrektifikationen sind aus dem Stand der Technik, wie z.B. bei der Luftzerlegung, bekannt.

Wie bereits vorstehend beschrieben, ist es notwendig, daß das verdichtete Gruben- und/oder Deponiegas, bevor es in die Tieftemperaturzerlegungsvorrichtung geführt wird, vorgekühlt wird. Diese Vorkühlung kann nun in indirektem Wärmeaustausch bevorzugterweise so erfolgen, daß das verdichtete Gruben- und/oder Deponiegas im Gegenstrom zu dem die Tieftemperaturzerlegungsvorrichtung verlassenden Produktgas-, Rückführgas und Restgasstrom geführt wird. In einer weiteren bevorzugten Ausführungsform wird vorgeschlagen, in Abhängigkeit des Methangehalts des Einsatzgases, eine evtl. überschüssige Wärmemenge durch verdampfenden Stickstoff zu entziehen, wobei der Wärmeaustausch wahlweise über Wärmeaustauscher vor Eintritt in die Rücklaufkondensation bzw. Tieftemperaturrektifikation oder durch Verdampfen im oberen Teil der Rücklaufkondensation bzw. Tieftemperaturrektifikation erfolgen kann.

Eine weitere Ausführungsform sieht vor, daß das entspannte Kondensat aus dem Mantelraum entweder dem Produktgasstrom oder, wenn der Methangehalt nicht ausreichend ist, dieses Kondensat über eine Rückführleitung wieder zum Anfang des Prozesses zurückzuführen. Dadurch ist ein zyklischer Prozeß möglich. Genauso kann mit dem Gas aus dem Mantelraum vorgegangen werden.

Die Erfindung betrifft weiterhin eine entsprechende Einrichtung zur Durchführung des Verfahrens. Diese Einrichtung ist dabei so aufgebaut, daß das Grubengas und/oder Deponiegas über entsprechende Leitungen drucklos abgesaugt wird und dann mindestens einem Verdichter zugeführt wird. Dieses so verdichtete Gruben- und/oder Deponiegas wird dann über entsprechende Leitungen über einen Trockner geleitet und von CO₂ befreit. Dieses so vorbehandelte verdichtete Gas wird dann in die Tieftemperaturzerlegungsvorrichtung geleitet. Die Tieftemperaturzerlegungsvorrichtung ist dabei bevorzugterweise eine Rücklaufkondensationsvorrichtung.

Die Rücklaufkondensationsvorrichtung besteht aus mindestens einer Säule, die mit entsprechendem Packungsmaterial gefüllt ist und die mit einem Kühlmantel ummantelt ist. Die Säule weist weiterhin einen Behälter auf, der an der Unterseite der Säule angeordnet ist und als Auffang für den Sumpf dient. Die Säule ist mit entsprechenden Zu- und Ableitungen für die zu- und abgeleiteten Gase und Flüssigkeiten sowie mit Ventilen versehen.

Eine weitere bevorzugte Ausführungsform sieht vor, daß die Tieftemperaturzerlegung in einer Tieftemperaturrektifikationsanlage durchgeführt wird. Derartige Tieftemperaturrektifikationsanlagen sind aus dem Stand der Technik bereits bekannt. In H. Hansen und H. Linde, Tieftemperaturtechnik, Springer Verlag Berlin, Heidelberg, New York, 1985, ist z.B. eine derartige Vorrichtung beschrieben.

Weitere Merkmale, Einzelheiten und Vorzüge der Erfindung ergeben sich aus der folgenden Beschreibung zweier bevorzugter Ausführungsformen der Erfindung anhand der Zeichnungen. Hierbei zeigen:

Fig. 1 den schematischen Aufbau einer erfindungsgemäßen Einrichtung mit einer Rücklaufkondensationsvorrichtung.

Fig. 2 zeigt den schematischen Aufbau einer erfindungsgemäßen Einrichtung mit einer mehrstufigen Rücklaufkondesationsvorrichtung.

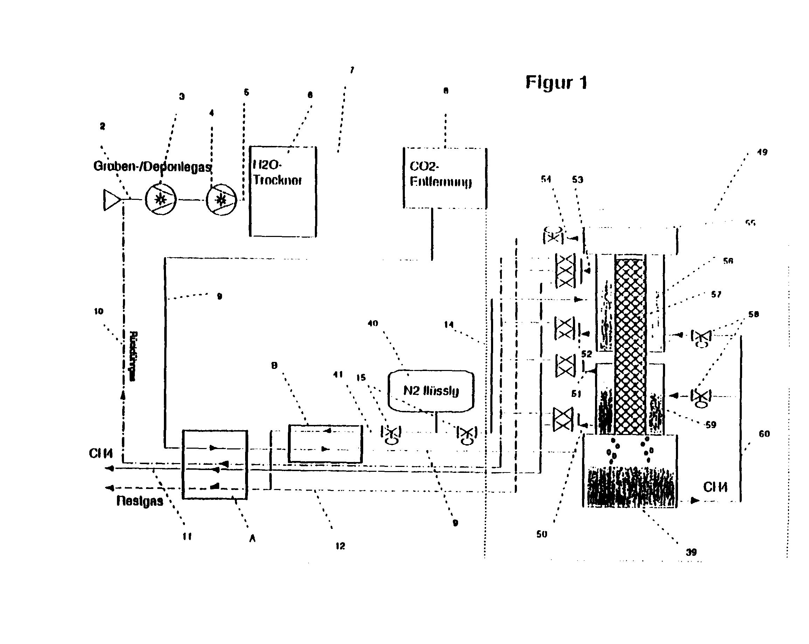

Fig. 1 zeigt nun eine Ausführungsform der Erfindung, wobei die Tieftemperaturzerlegung mittels einer Rücklaufkondensationsvorrichtung 49 vorgenommen wird. Zum Betrieb dieser Anlage wird Gruben- und/oder Deponiegas mit einem Methangehalt von 20 bis 65% drucklos entnommen und über eine Leitung 2 dem Verdichter, den Verdichtern 3 und 4, zugeführt. Das Gruben- und/oder Deponiegas wird dann auf einen Druck von 5 bis 15 bar verdichtet. Die Verdichtung ist abhängig vom Methangehalt des Einsatzgases. Dieses so verdichtete Gas wird nun über die Leitung 7 einem H₂O-Trockner 6 und über die Leitung 9 einem CO₂-Trockner 8 zugeführt. Dieses nun so vorbehandelte Gas wird über die Leitung 9 nun der Rücklaufkondensationseinrichtung 49 zugeführt. Das Einsatzgas in Leitung 9 wird dabei so geführt, daß es im Gegenstrom zum Produktgasstrom, der über die Leitung 11 und dem Restgasstrom, der über die Leitung 12 geführt wird, Wärme überträgt. Dadurch wird nun das verdichtete Gas im Gegenstrom zum den Produktgasen abgekühlt, um deren Kälteeinheit zur Vorkühlung zu nutzen. Dieser Vorgang ist in der Fig. 1 durch das Rechteck, das mit dem Bezugszeichen A symbolisiert ist, gekennzeichnet. Die Ausführungsform nach Fig. 1 ist nun so ausgebildet, daß eine weitere Teilkondensation möglich ist (symbolisiert durch das zweite Rechteck B). Diese Teilkondensation erfolgt dabei mit flüssigem Stickstoff, der aus einem entsprechenden Vorratsbehälter 40 über Ventile 15 mit der Leitung 41 zugeführt werden kann. Das so erzeugte Gas/Flüssigkeitsgemisch wird sodann über die Leitung 9 in den Behälter 39 der Rücklaufkondensationsvorrichtung geführt. Die eigentliche Anreicherung des Methan erfolgt nun in dieser Rücklaufkondensationsvorrichtung 49. Dabei strömt das eintretende Gas/Flüssigkeitsgemisch in die von außen gekühlte mit einer Packung versehene Säule 57 und wird dort weiter teilkondensiert. Es kommt dabei zu einer Aufkonzentrierung des schwerer siedenden Methans im Sumpf des Behälters 39. Erfindungsgemäß wird nun die Kühlung der Packung in der Säule 57 dadurch erreicht, daß das Konzentrat über die Leitung 60 zum Ventil 58 geführt wird und dort durch Entspannen in den Mantelraum 59 der Säule 57 gelangt. Dadurch wird nun eine Temperaturabsenkung erzielt. So kann das Konzentrat im Mantelraum 59 auf der Außenseite teilweise verdampfen und so die Kondensation in der Säule 57 bewirken. Das Produktgas wird nun über die Leitung 11 über Ventile abgeführt. Gleichzeitig wird das teilweise flüssige Konzentrat in der Ummantelung 59 ebenfalls abgeführt und über die Leitung 50 über Ventile in den Produktgasstrom der Leitung 11 oder teilweise in die Rückführleitung 10 geführt. Die leichter siedenden Bestandteile Stickstoff und/oder Sauerstoff werden über den Kopf 55 der Säule 57 abgeführt und in die Leitung 12 geführt. Gleichzeitig ist es noch vorgesehen, daß mittels des Vorratsbehälters 40 eine zusätzliche Kühlung in der Ummantelung 56 der Säule vorgenommen wird. Im Ausführungsbeispiel nach Fig. 1 ist die Säule 57 dabei so aufgebaut, daß zwei Ummantelungen (59, 56) vorgesehen sind, so daß das Sumpfkonzentrat aus dem Vorratsbehälter 39 sowohl in die Ummantelung 59 geführt wird, die direkt über dem Sumpf liegt und in eine zweite Stufe, die unter dem Kopf 55 angeordnet ist. Die Rücklaufleitungen für den Produktgasstrom 11, den Restgasstrom 12 und den Rückführgasstrom 10 sind dabei so angelegt, daß sie im Gegenstrom zum Gasstrom 9 liegen.

Die Anmelderin konnte dabei zeigen, daß mit einem derartigen Verfahren eine Aufkonzentrierung des Methangehalts auf eine Methangehaltgröße 88% erreichbar ist. Das so aufbereitete Gruben- und/oder Deponiegas kann dann direkt in eine Erdgasleitung eingespeist werden.

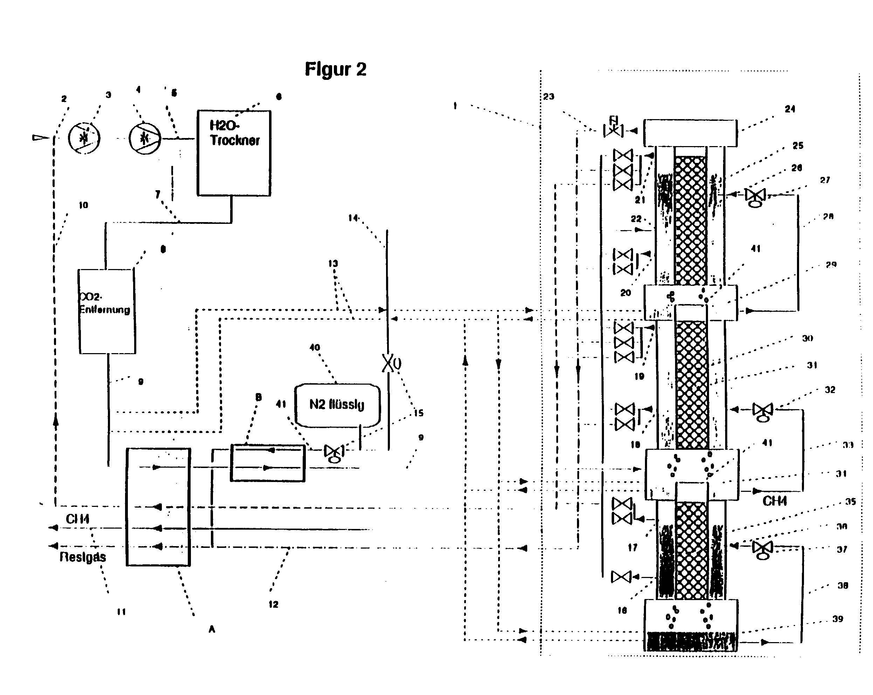

Fig. 2 zeigt nun eine weitere Ausgestaltung der Erfindung, wobei hier im Unterschied zur Fig. 1 eine mehrstufige Rücklaufkondensationsvorrichtung 1 vorgesehen ist. Im Unterschied zur Ausführungsform nach Fig. 1 tritt hier das verdichtete und teilkondensierte Gas in den Behälter 34 in den Sumpf ein. Dort strömt das Gas nach oben in die Säule 31, wo es weiter kondensiert wird. Das in der Säule 31 anfallende CH₄-reiche Kondensat rieselt nach unten in den Sumpf im Behälter 34. Der Behälter 34 wird beheizt, so daß leichter siedende Gase (N₂, O₂) verstärkt in die Gasphase entweichen. Dieses Gas steigt nun zusammen mit dem eingespeisten Gas in die Säule 31. Das Kondensat aus dem Sumpf des Behälters 34 wird nun teilweise an der Seite entnommen, entspannt und in den Mantelraum 30 der Säule 31 geleitet. Dort verdampft es bei einer Temperatur die unterhalb der Kondensationstemperatur in der Säule 31 liegt.

Das restliche nicht entspannte Kondensat aus dem Sumpf im Behälter 31 rieselt über ein Wehr 41 in die darunter angeordnete Säule 36. Im Behälter 39 angelangt, wird es dort erwärmt, so daß die noch darin enthaltenen leichter siedenden Gase verdampfen. Diese gelangen nun wieder in die Säule 36 zwischen Behälter 39 und Behälter 34, werden dort wieder teilweise kondensiert. Nicht kondensiertes Gas gelangt in die Säule zwischen Behälter 34 und 39. Der Füllstand in Behälter 39 wird konstant geregelt. Überschüssiges Kondensat wird als Produkt abgezogen oder entspannt und wieder auf die Mantelseite 35 der Säule geführt und liefert dort durch Verdampfung die notwendige Kondensationskälte der Säule 36.

Gasgemische, die die Säulen 36 und 31 zwischen Behälter 39, 34 und 29 durchströmt haben, gelangen in die Säule 26 oberhalb Behälter 29. Hier werden sie weiter teilkondensiert und zwar entweder mit dem Kondensat aus dem Sumpf im Behälter 29 oder mit flüssigem N₂. Wird mit flüssigem N₂ kondensiert, wird das Kondensat von Behälter 29 der Säule 31 aufgegeben.

Das methanarme (methanfreie) Gas wird am Kopf 24 der Säule 26 abgezogen, entspannt, den Wärmeaustauschern zugeführt und in die Umgebung entlassen. Das Beheizen der Behälter 29, 34, 39 geschieht mit noch nicht gekühltem Grubengas oder mit wieder erwärmtem Restgas.

Die Aufteilung der Rücklaufkondensationssäule in mehrere Abschnitte ermöglicht die Gewinnung von unterschiedlich stark angereicherten Kondensaten. Die Verdampfungstemperatur dieser Kondensate nimmt nach oben hin ab. Die Verdampfung des Kondensates im Mantelraum bewirkt eine weitere Aufkonzentrierung des Kondensates. Eine eventuell unterschiedliche Weiterverwendung von Kondensat und Gas aus dem Mantelraum ist möglich. Das Gas kann bei ausreichender Qualität dem Produktgas zugeleitet werden, bei nicht ausreichender, aber guter Qualität wieder dem Einsatzgas oder bei schlechter Qualität dem Restgas. Entsprechendes gilt für das Kondensat, wobei wir davon ausgehen, daß nur die Qualität des im oberen Abschnitt abgezogenen Kondensates eventuell nicht ausreichend ist.

Besonders mit dieser bevorzugten Ausführungsform ist es möglich, Einsatzgase mit niedrigen Methangehalten, die auch unter 40% liegen, bis auf Werte von über 90% anzureichern. Ein weiterer Vorteil des erfindungsgemäßen Verfahrens ist es, daß eine Verflüssigung von Restgas nicht notwendig ist.

## Patentansprüche

1. Verfahren zur Anreicherung eines 20 bis 65% Methan enthaltenden Gruben- oder Deponiegases, gekennzeichnet durch die Kombination der folgenden Verfahrensschritte:
a) daß das Gruben- und/oder Deponiegas entnommen und auf 5 bis 15 bar verdichtet wird,
b) daß dem verdichteten Gas CO₂ und Wasser entzogen wird,
c) im Anschluß daran eine Vorkühlung des verdichteten Gruben- und/oder Deponiegases erfolgt, und zwar in der Weise, daß eine Teilkondensation des Methans eintritt, und
d) daß dieses Gas/Flüssigkeitsgemisch mittels einer Tieftemperaturzerlegung in ein mindestens 85%iges Methan enthaltendes Produktgas und ein Restgas aufgetrennt wird.

2. Verfahren nach Anspruch 1,
dadurch **gekennzeichnet**, daß die Tieftemperaturzerlegung (Verfahrensschritt d) so erfolgt, daß das Gas/Flüssigkeitsgemisch in eine über einen Kühlmantel kühlbare Säule mit einer Packung geleitet wird, wobei sich durch Kühlung das höher siedende Methan in mindestens einem Sumpf anreichert (Konzentrat) und daß dieses Konzentrat beheizt und in den Kühlmantel der Säule entspannt wird, wobei es bei einer Temperatur unterhalb der Kondensationstemperatur in der Säule teilweise verdampft, so daß die Pakkung abgekühlt wird, und daß das Produktgas aus dem Kühlmantel und das Restgas aus dem Kopf der Säule abgezogen wird (Rücklaufkondensation).

3. Verfahren nach Anspruch 2, dadurch gekennzeichnet, daß eine zusätzliche Kühlung der Säule durch flüssiges N₂ erfolgt.

4. Verfahren nach mindestens einem der Ansprüche 2 oder 3, dadurch gekennzeichnet, daß das sich im Mantelraum der Säule befindliche Konzentrat entspannt und dem Produktgasstrom und/oder einem Rückführgasstrom zugeführt wird.

5. Verfahren nach mindestens einem der Ansprüche 2 bis 4, dadurch gekennzeichnet, daß aus dem Sumpf mit noch nicht gekühltem Gruben- und/oder Deponiegas bzw. Restgas die leichter siedenden Fraktionen ausgetrieben werden.

6. Verfahren nach mindestens einem der Ansprüche 2 bis 5, dadurch gekennzeichnet, daß eine Säule mit 2 bis 4 Sümpfen eingesetzt wird, wobei die Sümpfe miteinander kommunizieren können.

7. Verfahren nach Anspruch 1, dadurch gekennzeichnet, daß die Tieftemperaturzerlegung mittels einer Tieftemperaturrektifikation erfolgt.

8. Verfahren nach mindestens einem der Ansprüche 1 bis 7, dadurch gekennzeichnet, daß die Vorkühlung (Verfahrensschritt c) dadurch erfolgt, daß das verdichtete Gas im Gegenstrom zum Methan enthaltenden Produktgas- und/oder zum Restgasstrom und/oder zum Rückführgasstrom geführt wird.

9. Verfahren nach mindestens einem der Ansprüche 1 bis 8, dadurch gekennzeichnet, daß vor dem Verfahrensschritt d) in Abhängigkeit vom Methangehalt des Einsatzgases eine evtl. überschüssige Wärmemenge durch verdampfenden Stickstoff entzogen wird.

10. Verfahren nach mindestens einem der Ansprüche 1 bis 9, dadurch gekennzeichnet, daß beim Verfahrensschritt a) in Abhängigkeit vom Methangehalt das Gas auf 5 bis 15 verdichtet wird.

11. Verfahren nach mindestens einem der Ansprüche 1 bis 10, dadurch gekennzeichnet, daß zur Verdichtung Kompressoren eingesetzt werden.

12. Verfahren nach mindestens einem der Ansprüche 2 bis 11, dadurch gekennzeichnet, daß das entspannte Kondensat aus den Mantelräumen in Abhängigkeit des Methangehalts dem Produktgasstrom und/oder dem Rückführgasstrom zugeleitet wird.

13. Verfahren nach mindestens einem der Ansprüche 2 bis 12, dadurch gekennzeichnet, daß das Gas aus den Mantelräumen in Abhängigkeit der Methananreicherung entweder dem Restgasstrom oder dem Rückführgasstrom oder dem Produktgasstrom zugeleitet wird.

14. Einrichtung zur Durchführung des Verfahrens nach mindestens einem der Ansprüche 1 bis 13, dadurch gekennzeichnet, daß sie mindestens einen Verdichter (3, 4) aufweist, der über mindestens eine Leitung (5) mit einem CO₂-Wäscher (8) und einem H₂O-Trockner (6) verbunden ist, und daß mindestens eine kühlbare Leitung (9) vorgesehen ist, die das Gas der Tieftemperaturzerlegungsvorrichtung (1, 49) zuführt, wobei diese geeignete Zu- und Ableitungen für die Gase und Flüssigkeiten aufweist.

15. Einrichtung nach Anspruch 14, dadurch gekennzeichnet, daß die Tieftemperaturzerlegungsvorrichtung eine Rücklaufkondensationsvorrichtung (1) ist, die aus mindestens einer mit Füllkörpern gepackten Säule (57, 36, 31, 26) besteht, die von Kühlmänteln (56, 35, 30, 25) ummantelt ist,und daß mindestens ein Behälter (39, 34, 29) zur Aufnahme des Sumpfkonzentrates vorgesehen ist.

16. Einrichtung nach Anspruch 15, dadurch gekennzeichnet, daß die drei Säulen (36, 31, 26) mit entsprechendem Behälter (39, 34, 29) zur Aufnahme der Sümpfe vorgesehen sind,und daß die Sümpfe über Wehre (41) miteinander kommunizieren können.

17. Einrichtung zur Durchführung des Verfahrens nach Anspruch 14, dadurch gekennzeichnet, daß die Tieftemperaturzerlegungseinrichtung eine Tieftemperaturrektifikationskolonne ist.

18. Einrichtung nach mindestens einem der Ansprüche 14 bis 17, dadurch gekennzeichnet, daß die Vorkühlung des verdichteten Gases dadurch erfolgt, daß die Leitung (11) des Methans enthaltenden Produktgasstroms und/oder Restgasstroms (12) und/oder Rückführgas so geführt ist, daß sie im Gegenstrom zur Leitung (9) des Gruben- und/oder Deponiegases liegt.

## Claims

1. A method of enriching a mine or waste disposal gas containing 20 to 65% methane, characterized by the combination of the following method steps:
a. the mine and/or waste disposal gas is taken off and compressed to 5 to 15 bar,
b. CO₂ and water are removed from the compressed gas,
c. pre-cooling of the condensed mine and/or waste disposal gas is then effected, namely in such a manner that a partial condensation of the methane takes place, and
d. this gas/liquid mixture is separated by means of a low temperature separation into product gas containing at least 85% methane and a residual gas.

2. A method according to claim 1, characterized in that the low temperature separation (method step d) is so effected that the gas/liquid mixture is passed into a column with a packing, which can be cooled by a cooling jacket, wherein the higher boiling methane is enriched by cooling in at least one sump (concentrate) and in that this concentrate warms up and is expanded into the cooling jacket of the column. wherein it partially vaporises at a temperature below the condensation temperature in the column, so that the packing is cooled, and in that the product gas is taken off from the cooling jacket and the residual gas is taken off from the head of the column (reflux condensation).

3. A method according to claim 2, characterized in that additional cooling of the column is effected by liquid N₂.

4. A method according to claim 2 and/or 3, characterized in that the concentrate present in the jacket space of the column expands and is fed to the product gas stream and/or a feedback gas stream.

5. A method according to at least one of claims 2 to 4, characterized in that the lighter boiling fractions are driven out of the sump by not yet cooled mine and/or waste disposal gas or residual gas.

6. A method according to at least one of claims 2 to 5, characterized in that a column with 2 to 4 sumps is used, wherein the sumps can communicate with one another.

7. A method according to claim 1, characterized in that the low temperature separation is effected by means of low temperature rectification.

8. A method according to at least one of claims 1 to 7, characterized in that the pre-cooling (method step c) is effected in that the compressed gas is fed in counterflow to the product gas containing methane and/or to the residual gas stream and/or to the feedback gas stream.

9. A method according to at least one of claims 1 to 8, characterized in that a possible excess of heat is removed by evaporating nitrogen before the method step d), in dependence on the methane content of the feed gas.

10. A method according to at least one of claims 1 to 9, characterized in that the gas is compressed to 5 to 15 in dependence on the methane content in the method step a).

11. A method according to at least one of claims I to 10, characterized in that compressors are used for the compression.

12. A method according to at least one of claims 2 to 11, characterized in that the expanded condensate is fed from the jacket spaces to the product gas stream and/or the feedback gas stream in dependence on the methane content.

13. A method according to at least one of claims 2 to 12, characterized in that the gas is fed out of the jacket spaces either to the residual gas stream or the feedback gas stream in dependence on the methane enrichment.

14. Apparatus for carrying out the method according to at least one of claims I to 13, characterized in that comprises at least one compressor (3, 4), which is connected through at least one line (5) to a CO₂ washer (8) and an H₂O drier (6), and in that at least one line (9) which can be cooled is provided, which feeds the gas to the low temperature separation device (1, 49), wherein this has suitable feed and take-off lines for the gases and liquids.

15. Apparatus according to claim 14, characterized in that the low temperature separation device is a reflux condensation device (1), which consists of at least one column (57, 36, 31, 26) packed with packing bodies, which is surrounded by cooling jackets (56, 35, 30, 25), and in that at least one receptacle (39, 34, 29) is provided to receive the sump concentrate.

16. Apparatus according to claim 15, characterized in that the three columns (36, 31, 26) are provided with corresponding receptacles (39, 34, 29) for reception of the sumps and in that the sumps can communicate with one another over weirs (41).

17. Apparatus for carrying out the method according to claim 14, characterized in that the low temperature separation device is a low temperature rectification column.

18. Apparatus according to at least one of claims 14 to 17, characterized in that the pre-cooling of the compressed gas is effected in that the line (11) of the product gas stream containing methane and/or the residual gas stream (12) and/or feedback gas is so fed that it is in counterflow to the line (9) of the mine and/or waste disposal gas.

## Revendications

1. Procédé pour enrichir un gaz des marais ou un gaz de décharge contenant 20 à 60 % de méthane,
caractérisé par
la combinaison des étapes suivantes du procédé :
a) on enlève le gaz des marais et/ou le gaz de décharge et on le comprime sous une pression de 5 à 15 bars,
b) on retire du gaz comprimé le CO₂ et l'eau,
c) à la suite de cela a lieu un refroidissement préalable du gaz des marais et/ou du gaz de décharge, et en fait d'une manière telle que se produise une condensation partielle du méthane, et
d) ce mélange de gaz et/ou de liquide est séparé au moyen d'une décomposition à basse température en un gaz produit contenant au moins 85 % de méthane, et un gaz résiduel.

2. Procédé selon la revendication 1,
caractérisé en ce que
- la décomposition à basse température (étape d) du procédé) a lieu de telle façon que le mélange de gaz et de liquide soit dirigé dans une colonne, avec un empilage, colonne que l'on peut refroidir au moyen d'une enveloppe réfrigérante, le méthane qui a un point d'ébullition plus élevé s'enrichissant par refroidissement dans au moins un bassin de décantation (concentré d'enrichissement) et
- ce concentré d'enrichissement est chauffé et se détend dans l'enveloppe de refroidissement de la colonne, en se vaporisant en partie à une température située en dessous de la température de condensation dans la colonne, de telle sorte que l'empilage soit refroidi, et
- le gaz produit provenant de l'enveloppe de refroidissement et le gaz résiduel sont extraits de la tête de la colonne (condensation rétrograde).

3. Procédé selon la revendication 2,
caractérisé en ce que
l'on effectue un refroidissement additionnel de la colonne avec de l'azote liquide.

4. Procédé selon au moins l'une des revendications 2 ou 3,
caractérisé en ce que
le concentré d'enrichissement, qui se trouve dans la chambre enveloppant la colonne, se détend et est amené à l'écoulement du gaz produit et/ou à un écoulement gazeux rétrograde.

5. Procédé selon au moins l'une des revendications 2 à 4,
caractérisé en ce qu'
on évacue du bassin de décantation avec le gaz des marais et/ou de décharge, ou le gaz résiduel non encore refroidis les fractions que l'on peut faire bouillir plus facilement.

6. Procédé selon au moins l'une des revendications 2 à 5,
caractérisé en ce qu'
on utilise une colonne avec 2 à 4 bassins de décantation, les bassins de décantation pouvant communiquer les uns avec les autres.

7. Procédé selon la revendication 1,
caractérisé en ce que
la décomposition à basse température a lieu au moyen d'une rectification à basse température.

8. Procédé selon au moins l'une des revendications 1 à 7,
caractérisé en ce que
le refroidissement préalable (étape c) du procédé) a lieu grâce au fait que le gaz comprimé est amené à contre-courant du courant rétrograde et/ou du gaz produit et/ou des gaz résiduels, contenant du méthane.

9. Procédé selon au moins l'une des revendications 1 à 8,
caractérisé en ce qu'
on enlève avant l'étape d) du procédé en fonction de la teneur en méthane du gaz utilisé une quantité de chaleur éventuellement en excès par de l'azote à vaporiser.

10. Procédé selon au moins l'une des revendications 1 à 9,
caractérisé en ce que
lors de l'étape a) du procédé on comprime le gaz à une pression de 5 à 15 bars en fonction de sa teneur en méthane.

11. Procédé selon au moins l'une des revendications 1 à 10,
caractérisé en ce qu'
on utilise des compresseurs pour effectuer la compression du gaz.

12. Procédé selon au moins l'une des revendications 2 à 11,
caractérisé en ce que
le concentré d'enrichissement détendu est amené, à partir des chambres de l'enveloppe, en fonction de la teneur en méthane, au courant de gaz produit et/ou au courant de gaz recyclé.

13. Procédé selon au moins l'une des revendications 2 à 12,
caractérisé en ce que
le gaz est amené, à partir des chambres de l'enveloppe, en fonction de la teneur en méthane, soit au courant de gaz résiduel, soit au courant de gaz recyclé, soit au courant de gaz produit.

14. Dispositif pour la mise en oeuvre du procédé selon au moins l'une des revendications 1 à 13,
caractérisé en ce qu'
- il présente au moins un compresseur (3, 4), relié par au moins une conduite (5) à un laveur à CO₂ (8) et à une essoreuse à eau (6) et
- au moins une conduite (9), que l'on peut refroidir, amène le gaz au dispositif de décomposition à basse température (1, 49), celui-ci présentant des conduites d'amenée et d'évacuation appropriées pour les gaz et pour les liquides.

15. Dispositif selon la revendication 14,
caractérisé en ce que
- le dispositif de décomposition à basse température est un dispositif de condensation en sens inverse (1) qui se compose d'au moins une colonne (57, 36, 31, 26) avec des corps de remplissage, et des enveloppes de refroidissement (56, 35, 30, 25), et
- il est prévu au moins un réservoir (39, 34, 29) pour recevoir le concentré d'enrichissement du bassin de décantation.

16. Dispositif selon la revendication 15,
caractérisé en ce que
- les trois colonnes (36, 31, 26) sont prévues avec des réservoirs correspondants (39, 34, 29) pour recevoir les concentrés des bassins de décantation et
- les bassins de décantation peuvent communiquer les uns avec les autres au moyen de déversoirs (41).

17. Dispositif pour la mise en oeuvre du procédé selon la revendication 14,
caractérisé en ce que
le système de décomposition à basse température est une colonne de rectification à basse température.

18. Dispositif selon au moins l'une des revendications 14 à 17,
caractérisé en ce que
le refroidissement préalable du gaz comprimé a lieu grâce au fait que la conduite (Il) du courant de gaz produit contenant du méthane et/ou du courant de gaz résiduel (12) et/ou de gaz recyclé, est orientée à contre-courant de la conduite (9) du gaz de marais et/ou du gaz de décharge.
